# EUROPEAN PATENT SPECIFICATION

(11) **EP 2 077 288 B1**
(45) Date of publication and mention of the grant of the patent: **06.11.2013**
(21) Application number: 07806391.4
(22) Date of filing: 30.08.2007
(51) Int. Cl.: C08G 59/24, C08J 5/24, G02F 1/1333

(54) **TRANSPARENT COMPOSITE SHEET**
TRANSPARENTE VERBUNDFOLIE
FEUILLE COMPOSITE TRANSPARENTE

(30) Priority: 11.10.2006 JP 2006277077; 30.03.2007 JP 2007090845
(43) Date of publication of application: 08.07.2009
(73) Proprietor: Sumitomo Bakelite Co., Ltd., Shinagawa-ku Tokyo 140-0002 (JP)
(72) Inventor: OKA, Wataru, Tokyo; 1400002 (JP); ITO, Takeshi, Tokyo; 1400002 (JP); ITO, Hisashi, Tokyo; 1400002 (JP); NAITO, Manabu, Tokyo; 1400002 (JP)
(74) Representative: Vossius & Partner
(86) International application number: PCT/JP2007/066914
(87) International publication number: WO 2008/044397

(56) References cited:
- EP-A1- 1 659 141
- JP-A- 2003 048 293
- JP-A- 2005 138 389
- JP-A- 2005 140 976
- JP-A- 2005 206 787
- JP-A- 2005 240 028
- JP-A- 2005 298 634
- JP-A- 2006 176 586
- JP-A- 2007 168 150

## Description

### TECHNICAL FIELD

The present invention relates to a transparent composite sheet and to a substrate for a display element that uses the transparent composite sheet.

### BACKGROUND ART

Glass substrates having high heat resistance and transparency, a low coefficient of linear expansion, and minimal optical anisotropy are widely used as substrates for liquid crystal display elements or organic EL display elements, as well as color filter substrates, solar cell substrates, and the like. There has recently been a need for smaller size, thinner profile, lighter weight, impact resistance, and flexibility in display devices, and displays that use low-thickness glass substrates have therefore been proposed. Although low-thickness glass has improved flexibility in comparison to conventional glass, glass alone has extremely low mechanical strength. A resin film is therefore affixed to the glass surface, or a protective resin layer is provided to enhance impact resistance (Patent Document 1). However, there is a need for further enhanced impact resistance and flexibility of the substrate.
Plastic materials having impact resistance and flexibility have been studied as alternatives to a glass substrate. Examples of resins used in a plastic substrate for a display element include the composition of Patent Document 2 composed of an alicyclic epoxy resin, an acid anhydride curing agent, an alcohol, and a curing catalyst; the resin composition of Patent Document 3 composed of an alicyclic epoxy resin, an acid anhydride curing agent partially esterified by an alcohol, and a curing catalyst; and the resin composition of Patent Document 4 composed of an alicyclic epoxy resin, an acid anhydride curing agent having a carboxylic acid, and a curing catalyst.
The plastic materials disclosed in Patent Documents 2 through 4 as substitutes for glass have a smaller limiting curvature radius than glass, and are flexible and impact resistant, but the linear expansion coefficient of the plastic materials is significantly larger than that of the Si and other thin-film materials layered on the plastic material. Such mismatching of linear expansion coefficients is known to cause thermal stress, distortion, cracking or peeling of formed layers, and curving of the plastic substrate on which layers are formed (Non-patent Document 1).

As techniques for overcoming such problems, a transparent composite optical sheet composed of an alicyclic epoxy resin having an ester group, a bisphenol A-type epoxy resin, an acid anhydride curing agent, a catalyst, and a glass cloth is disclosed in Patent Document 5; a transparent composite optical sheet composed of an alicyclic epoxy resin having an ester group, an epoxy resin having a dicyclopentadiene backbone, an acid anhydride curing agent, and a glass cloth is disclosed in Patent Document 6; and a transparent substrate composed of a bisphenol A-type epoxy resin, a bisphenol A novolak-type epoxy resin, an acid anhydride curing agent, and a glass cloth is disclosed in Patent Document 7.
A significant reduction of the linear expansion coefficient is apparent in the glass cloth composites of Patent Documents 5 through 7 in comparison to the plastic materials of Patent Documents 1 through 3, but the glass cloth composites have inadequate heat resistance. The glass cloth composites also have a high degree of optical anisotropy, and therefore may reduce display performance.

In a display element such as a liquid crystal display element that uses an optical shutter function of a polarizing plate and liquid crystal driving, the display performance of the element is adversely affected by variation of the polarization state of transmitted light that passes through the transparent substrate. When there is a high degree of optical anisotropy in the transparent substrate, incident linearly polarized light passing through the polarizing plate is changed to elliptically polarized light by the optical anisotropy in the transparent substrate, and there may be a reduction in switching performance between transmission and non-transmission of transmitted light that passes through the emission-side polarizing plate when the liquid crystals are driven. In other words, a transparent substrate having low optical anisotropy must be used in order to obtain a high-contrast display element.

Furthermore, since a glass cloth composite is a composite of materials having different coefficients of thermal linear expansion, thermal stress caused by different thermal expansion coefficients or the process temperature during substrate manufacturing occurs in a distribution in the composite material. The thermal stress distribution in the glass fiber and resin matrix composite material can be considered to include the three main stress directions of the radial direction, circumferential direction, and axial direction of the glass fibers on the basis of the axial symmetry of the composite material (Non-patent Document 2). In other words, optical anisotropy along the glass fibers, and optical anisotropy directly to the glass fibers can occur due to thermal stress in the resin and the glass fibers. For example, in a composite substrate composed of a resin and glass cloth in which glass fibers are woven vertically and horizontally, since localized optical anisotropy occurs in the direct direction and the direction of the glass fiber axis, a lattice pattern is apparent in the transmitted light under a polarizing microscope in which the polarizer and the analyzer are set so that the polarization axes cross at 90° (in a cross-Nicol state). Since the optical anisotropy of a glass cloth composite occurs in the directions parallel to and direct to the fiber axis of the glass cloth, the lattice pattern of the transmitted light is most apparent when the glass fiber axis is turned 45° from the polarizer. In other words, in the case of a display element in which a glass cloth composite is used as the transparent substrate, depending on the arrangement of the polarizing plate and the axis of the glass cloth fibers of the composite substrate, the contrast of the display element can be reduced by disorder in the polarization state of the transmitted light.

Minute and localized disorder in the polarization state significantly affects the performance of the display element. For example, light scattering due to aggregation of pigment causes reduced display contrast in pigment-dispersion-based color filters having superior heat resistance and light fastness to dye-based color filters, and ways of improving the dispersion stability of the pigment have therefore been investigated (Patent Documents 8, 9, and 10). In other words, disorder in the polarization state due to minute optical anisotropy that occurs in a glass cloth composite is a characteristic that cannot be ignored in the production of a high-contrast high-definition display element.

A glass cloth composite, a laminate sheet in which a glass cloth is used, or a prepreg such as in Patent Documents 5 through 7 is a composite (FRP) of different types of materials, and is known to therefore be easily damaged and to have low resistance to compression, tension, bending, and other external forces (Patent Document 11).
In general, when stress occurs in a composite material of fibers and a resin matrix due to an external cause or an internal cause (e.g., a difference in the linear expansion coefficient between the fibers and the resin matrix), damage occurs through various processes. For example, damage due to stress (axially directed tensile stress, σ₁ᵤ) occurring parallel to the axial direction of the fibers, damage due to stress (transverse-directed tensile stress σ₂ᵤ) occurring perpendicular to the fiber direction, damage due to stress (τ₁₂ᵤ) occurring in a shear direction, and other cases of damage are possible.
It is known that in a case in which the fibers and the matrix resin are broken by a large tensile stress parallel to the fibers, the breaking direction is the direction perpendicular to the fibers, the transverse-directed tensile strength and the strength in the shear mode are extremely low, and the composite material breaks in a plane parallel to the fiber direction. A break is always located in the matrix, at the fiber/matrix interface, or in the fibers (Non-patent Documents 3 and 4).
It is difficult in the conventional techniques described above to provide a transparent composite sheet that has a small linear expansion coefficient, excellent transparency/heat resistance, minimal optical anisotropy, and a high degree of flatness, and therefore does not reduce display quality, and that also has excellent resistance to impact, tension, bending, and other external forces.
[Patent Document 1] Japanese Laid-open Patent Application No. 2004-50565
[Patent Document 2] Japanese Laid-open Patent Application No. 6-337408
[Patent Document 3] Japanese Laid-open Patent Application No. 2001-59015
[Patent Document 4] Japanese Laid-open Patent Application No. 2001-59014
[Patent Document 5] Japanese Laid-open Patent Application No. 2004-51960
[Patent Document 6] Japanese Laid-open Patent Application No. 2005-146258
[Patent Document 7] Japanese Laid-open Patent Application No. 2004-233851
[Patent Document 8] Japanese Laid-open Patent Application No. 8-94823
[Patent Document 9] Japanese Laid-open Patent Application No. 8-259876
[Patent Document 10] Japanese Laid-open Patent Application No. 8-295820
[Patent Document 11] International Laid-open Patent Application No. 03/018675
[Non-patent Document 1] Monthly Display, January 2000, p. 35
[Non-patent Document 2] H. Pristshky, Physics, 5, [12] (1934), pp. 406-411.
[Non-patent Document 3] An Introduction to Composite Materials (1984, Baifukan)
[Non-patent Document 4] An Introduction to Composite Materials (1997, Shokabo)

JP 2005 298634 is part of the background art.

### DISCLOSURE OF THE INVENTION

### Problems That the Invention Is Intended to Solve

An object of the present invention is to provide a transparent composite sheet that has a small linear expansion coefficient, excellent transparency/heat resistance, minimal optical anisotropy, and a high degree of flatness, and therefore does not reduce display quality, and that also has excellent resistance to impact, tension, bending, and other external forces; and to provide a display element substrate in which the transparent composite sheet is used.

### Means for Solving the Problems

The transparent composite sheet according to the present invention is characterized in being obtained by curing a composite composition comprising a transparent resin composition and a glass filler, wherein said transparent resin composition includes:
(i) an alicyclic epoxy resin indicated by Chemical Formula (1) below and/or an alicyclic epoxy resin indicated by Chemical Formula (2) below; 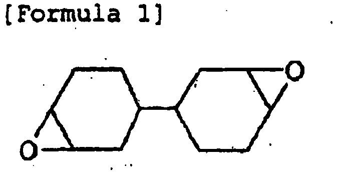 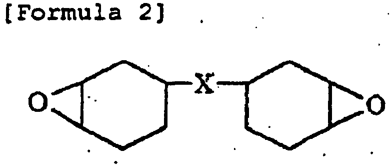 wherein in Formula 2, -X- is -O- -S-, -SO-, -SO₂-, - CH₂-, -CH(CH₃)-, or -C(CH₃)₂-;
(ii) at least one type of compound other than said alicyclic epoxy resin, the compound having one cationic-polymerizable functional group and at least.one polar group other than the cationic-polymerizable functional group in a molecule of the compound; and
(iii) a curing agent.

Since these alicyclic epoxy resins have excellent curing properties at low temperature, and extremely high heat resistance, and the linear expansion coefficient of the cured epoxy resin is low, residual stress can be reduced by reducing distortion that occurs at the interface of the glass filler and the resin during fabrication of the transparent composite sheet. As a result, the optical anisotropy of the composite sheet is reduced, and the flatness of the composite sheet is also enhanced.
By adding the cationic-polymerizable compound having one cationic-polymerizable functional group and at least one polar group other than the cationic-polymerizable functional group in a molecule of the compound other than the alicyclic epoxy resins, it is possible to suppress breakage of the resin and separation of the glass filler and the matrix resin at the interface thereof, which occur when the cationic-polymerizable compound other than the alicyclic epoxy resins is not added, and impact resistance and flexibility can be enhanced.

In the configuration described above, the admixture ratio of the alicyclic epoxy resin and the compound having a cationic-polymerizable functional group is preferably 99:1 to 70:30.
In any of the configurations described above, the compound having a cationic-polymerizable functional group preferably includes one or more compounds selected from the group that includes a compound having an epoxy group, a compound having an oxetanyl group, and a compound having a vinyl ether group.
In any of the configurations described above, the compound having a cationic-polymerizable functional group is preferably a compound having one cationic-polymerizable functional group in a molecule of the compound.
In any of the configurations described above, the polar group is preferably a hydroxyl group.
In any of the configurations described above, the curing agent preferably comprises a cationic curing catalyst.
In any of the configurations described above, the content of the glass filler is preferably 1 to 90 wt% with respect to the transparent composite sheet.
In any of the configurations described above, the glass filler is preferably a glass cloth.
In any of the configurations described above, the difference of the refractive index of the transparent resin composition after curing and the refractive index of the glass filler is preferably 0.01 or less.
In any of the configurations described above, the thickness is preferably 40 to 200 µm.
In any of the configurations described above, the transmittance of light having a wavelength of 400 nm is preferably 80% or higher.
In any of the configurations described above, the average linear expansion coefficient at 30°C to 250°C is preferably 20 ppm or lower.
The display element substrate according to the present invention is composed of the transparent composite sheet having any of the configurations described above.

### BEST MODE FOR CARRYING OUT THE INVENTION

The present invention will be described in detail hereinafter.
The present invention is a transparent composite sheet obtained by curing a composite composition comprising a transparent resin composition and glass filler wherein said transparent resin composition includes:
(i) an alicyclic epoxy resin indicated by Chemical Formula (1) below and/or an alicyclic epoxy resin indicated by Chemical Formula (2) below; 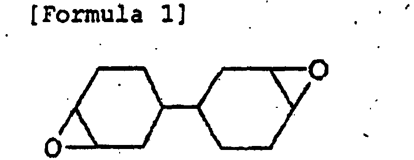 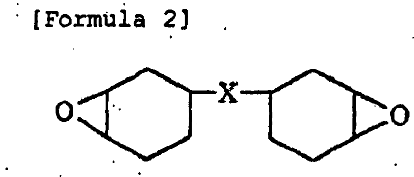 wherein in Formula2, -X- is -O-, -S-, -SO-, -SO₂-, - CH₂-, -CH(CH₃)-, or -C(CH₃)₂-;
(ii) at least one type of compound other than said alicyclic epoxy resin, the compound having one cationic-polymerizable functional group and at least one polar group other than the cationic-polymerizable functional group in a molecule of the compound; and
(iii) a curing agent.

The alicyclic epoxy resin that is the primary component used in the present invention is an alicyclic epoxy resin indicated by Chemical Formula (3) or (4), and may be used singly or as an appropriate mixture. The reason for this is that these alicyclic epoxy resins have excellent curing properties at low temperature, and extremely high heat resistance, and the linear expansion coefficient of the cured epoxy resin is low, residual stress can be reduced by reducing distortion that occurs at the interface of the glass filler and the resin during fabrication of the transparent composite sheet. Reducing the interface stress is important for reducing the optical anisotropy of the composite sheet, as well as enhancing the flatness of the composite sheet.

The compound, having a cationic-polymerizable functional group and at least one polar group other than the cationic-polymerizable functional group in a molecule of the compound, other than the alicyclic epoxy resin indicated by Chemical Formula (3) or (4) used in the present invention is preferably a compound having an epoxy group, a compound having an oxetanyl group, or a compound having a vinyl ether group, and may be used singly or as a mixture of several types thereof.
It is sufficient insofar as the compound having an epoxy group that is cationic-polymerizable, other than the alicyclic epoxy resin indicated by Chemical Formulas (3) and (4), includes one epoxy group in the molecule thereof, and various epoxy resins may be used. Examples of glycidyl-type epoxy resins include, epoxy resins having a triglycidyl isocyanurate backbone, epoxy resins having a cardo backbone, epoxy resins having a polysiloxane structure, and phenylglycidyl ethers; and examples of alicyclic epoxy resins include 3,4-epoxycyclohexylmethyl 3',4'-epoxycyclohexanecarboxylate, acetal diepoxide, a compound in which 3,4-epoxycyclohexyl methanol and 3,4-epoxycyclohexane carboxylic acid are esterified at both ends of an ε-caprolactone oligomer, epoxidated hexahydrobenzyl alcohol.

Examples of compounds having a cationic-polymerizable oxetanyl group include 1,4-bis{[(3-ethyl-3-oxetanyl)methoxy]methyl}benzene(Aron Oxetane OXT-121 (XDO)), di[2-(3-oxetanyl)butyl]ether (Aron Oxetane OXT-221 (DOX)), 1,4-bis[(3-ethyloxetane-3-yl)methoxy]benzene (HQOX), 1,3-bis[(3-ethyloxetane-3-yl)methoxy]benzene (RSOX), 1,2-bis[(3-ethyloxetane-3-yl)methoxy]benzene (CTOX), 4,4'-bis[(3-ethyloxetane-3-yl)methoxy]biphenyl (4,4'-BPOX), 2,2'-bis[(3-ethyl-3-oxetanyl)methoxy]biphenyl (2,2'-BPOX), 3,3',5,5'-tetramethyl[4,4'-bis(3-ethyloxetane-3-yl)methoxy]biphenyl (TM-BPOX), 2,7-bis[(3-ethyloxetane-3-yl)methoxy]naphthalene (2,7-NpDOX), 1,6-bis[(3-ethyloxetane-3-yl)methoxy]-2,2,3,3,4,4,5,5-octafluorohexane (OFH-DOX), 3(4), 8(9)-bis[(1-ethyl-3-oxetanyl)methoxymethyl]-tricyclo[5.2.1.0^{2.6}]decane, 1,2-bis[2-{(1-ethyl-3-oxetanyl)methoxy}ethylthio]ethane, 4,4'-bis[(1-ethyl-3-oxetanyl)methyl]thiodibenzene thioether, 2,3-bis[(3-ethyloxetane-3-yl)methoxymethyl]norbornane (NDMOX), 2-ethyl-2-[(3-ethyloxetane-3-yl)methoxymethyl]-1,3-O-bis[(1-ethyl-3-oxetanyl)methyl]-propane-1,3-diol (TMPTOX), 2,2-dimethyl-1,3-O-bis[(3-ethyloxetane-3-yl)methyl]-propane-1,3-diol (NPGOX), 2-butyl-2-ethyl-1,3-O-bis[(3-ethyloxetane-3-yl)methyl]-propane-1,3-diol, 1,4-O-bis[(3-ethyloxetane-3-yl)methyl]-butane-1,4-diol, 2,4,6-O-tris[(3-ethyloxetane-3-yl)methyl]cyanurate, an etherification product (BisAOX) of bisphenol A and 3-ethyl-3-chloromethyloxetane (abbreviated as OXC), an etherified compound of bisphenol F and OXC (BisFOX), an etherified compound of phenol novolak and OXC (PNOX), an etherified compound of cresol novolak and OXC (CNOX), a silicon alkoxide of 3-ethyl-3-hydroxymethyloxetane (OX-SC), 3-ethyl-3-(2-ethyl hexyloxymethyl)oxetane (Aron Oxetane OXT-212 (EHOX)), 3-ethyl-3-(dodecyloxymethyl)oxetane (OXR-12), 3-ethyl-3-(octadecyloxymethyl)oxetane (OXR-18), 3-ethyl-3-(phenoxymethyl)oxetane (Aron oxetane OXT-211 (POX)), 3-ethyl-3-hydroxymethyloxetane (OXA), 3-(cyclohexyloxy)methyl-3-ethyloxetane (CHOX), The names in parentheses in these examples are abbreviations or product names of Toagosei Co., Ltd.

The compound having a cationic-polymerizable vinyl ether group is not particularly limited, but may be 2-hydroxy ethyl vinyl ether, diethylene glycol monovinyl ether, 4-hydroxy butyl vinyl ether, diethylene glycol monovinyl ether, triethylene glycol divinyl ether, cyclohexane methanol divinyl ether, cyclohexane dimethanol monovinyl ether, methoxyethyl vinyl ether, ethoxy ethyl vinyl ether, pentaerythritol tetravinyl ether.

Adding these components decreases the cross-linking density of the cured substance and also enhances the polarity of the cured substance. It is therefore possible to suppress the occurrence of breakage of the resin and separation of the glass filler and the matrix resin at the interface thereof that occur when a cationic-polymerizable compound other than that indicated by Chemical Formula (3) or (4) is not added, and impact resistance and flexibility can be enhanced.

The weight ratio in the admixture of the alicyclic epoxy resin indicated by Chemical Formula (3) or (4) and the compound having a cationic-polymerizable functional group other than the alicyclic epoxy resin indicated by Chemical Formula (3) or (4) is preferably 99:1 to 70:30.

The curing agent of the resin composition used in the present invention is not particularly limited, and an acid anhydride, an aliphatic amine, or other cross-linking agent, or a cationic curing catalyst, anionic curing catalyst, or other curing agent may be used.

However, a resin that can be cured using a cationic curing catalyst is preferred in order to suppress the occurrence of distortion at the interface of the glass filler and the resin, and to make the residual stress as small as possible. The reason for this is that the resin material can be cured at a low temperature when the aforementioned alicyclic epoxy resin is cured using a cationic curing catalyst. When an acid anhydride or other curing agent is used for cuing, although the objects of the present invention can be obtained, curing at low temperature is difficult compared to a cationic polymerization system, and the linear expansion coefficient is also large in comparison to a cationic polymerization system. Stress at the interface of the glass filler and the resin therefore increases.

Another reason is that the heat resistance (e.g., the glass transition temperature) of the cured substance is higher than the heat resistance of a cured substance cured using another curing agent (e.g., an acid anhydride) when the resin composition is cured using the cationic curing catalyst. The reason that the heat resistance of the cured substance in which the cationic curing catalyst is used is higher than that of the substance in which another catalyst is used is that the cross-linking density of the cured substance obtained by curing the resin composition using the cationic curing catalyst is higher than the cross-linking density of the cured substance obtained by curing using another curing agent (e.g., an acid anhydride).
Consequently, as described above, an acid anhydride or the like may be used as the curing agent, but a cationic curing catalyst is preferred.

The cationic curing catalyst may be a compound that releases a substance that initiates cationic polymerization when heated, e.g., an onium salt-based (*4) cation curing catalyst, an aluminum chelate-based cation curing catalyst), a compound that releases a substance that initiates cationic polymerization when exposed to active energy rays (e.g., an onium salt-based cationic curing catalyst or the like), or the like. Among these examples, a thermal cationic curing catalyst is preferred. A cured substance having more excellent heat resistance can thereby be obtained.

Examples of the thermal cationic curing catalyst include aromatic sulfonium salts, aromatic iodonium salts, ammonium salts, aluminum chelates, boron trifluoride amine complexes, and the like. Specifically, aromatic sulfonium salts include SI-60L, SI-80L, and SI-100L manufactured by Sanshin Chemical Industry, SP-66 and SP-77 manufactured by Adeka Corporation, and other hexafluoroantimonate salts; aluminum chelates include ethyl acetoacetate aluminum diisopropylate, aluminum tris(ethylacetoacetate), and the like; and boron trifluoride amine complexes include boron trifluoride monoethylamine complex, boron trifluoride imidazole complex, boron trifluoride piperidine complex, and the like.
The optical cationic curing catalyst may be SP170 manufactured by Adeka Corporation, or the like.

The content ratio of the cationic catalyst is not particularly limited, but when an epoxy resin indicated by Chemical Formula (1) is used, for example, a content ratio of 0.1 to 5 parts by weight with respect to 100 parts by weight of the epoxy resin is preferred, and 0.5 to 3 parts by weight is particularly preferred.

In the case of optical curing, a sensitizing agent, an acid amplifier, or the like may also be used as needed to accelerate the curing reaction.

The difference of the refractive index of the glass filler and the refractive index after curing of the transparent resin composition in the transparent composite sheet of the present invention is preferably 0.01 or less in order to maintain excellent transparency, and more preferably 0.005 or less.

The refractive index of the glass filler used in the present invention is preferably 1.4 to 1.6, and a refractive index of 1.5 to 1.55 is particularly preferred. The reason for this is that when the refractive index is within this range, a transparent resin near the Abbe number of the fiber material can be selected, the refractive indexes match for a wider range of wavelengths the closer the Abbe number of the transparent resin is to the Abbe number of the glass, and a high transmittance of light rays in a wide range is obtained.

A cloth, nonwoven cloth, or other fiber cloth or the like may be used as the glass filler in the present invention, and among these examples, glass cloth and glass nonwoven cloth are preferred for having significant effects of reducing the linear expansion coefficient, and glass cloth is more preferred.

Types of glass include E glass, C glass, A glass, S glass, T glass, D glass, NE glass, quartz, low dielectric glass, high dielectric glass, and the like, and among these examples, E glass, S glass, T glass, and NE glass are preferred for having a low occurrence of alkali metals and other ionic impurities, and for being easily obtainable.

The content ratio of the glass filler is preferably 1 to 90 wt% with respect to the transparent composite sheet, more preferably 10 to 80 wt%, and more preferably 30 to 70 wt%. Molding is easy when the content ratio of the glass filler is within this range, and linear expansion due to composite formation is reduced. The reason for this is that a large amount of the glass filler enhances the uniformity of the amount of resin per unit volume, and uniformity of stress enhances the flatness of the transparent composite substrate.

A thermoplastic resin or a thermoplastic resin oligomer or monomer, or a coupling agent or the like may be jointly used as needed in the transparent composite sheet of the present invention in a range that does not compromise transparency, solvent resistance, low heat properties, optical characteristics, flatness, and other characteristics. When these oligomers or monomers are used, the composition ratio must be adjusted so that the refractive index of the whole matches the refractive index of the glass filler. Antioxidants, UV absorbing agents, dyes, and other inorganic fillers may also be included in small amounts as needed in the composite composition of the present invention in ranges that do not compromise the transparency, solvent resistance, heat resistance, and other characteristics.

The method for producing the transparent composite sheet of the present invention is not particularly limited, and examples thereof include a method whereby the uncured resin composition and the glass filler are directly mixed, cast in the necessary direction, and then cross-linked and formed into a sheet; a method whereby the uncured resin composition is dissolved in a solvent, the glass filler is dispersed therein, and the product is cast, after which the product is cross-linked and formed into a sheet; a method whereby a varnish in which the uncured resin composition or the resin composition is dissolved in a solvent is soaked into a glass cloth or glass nonwoven cloth, and then the product is cross-linked and formed into a sheet or the like; and other methods.

When the transparent composite sheet of the present invention is used as a plastic substrate for a liquid crystal display element, a substrate for a color filter, a plastic substrate for an organic EL display element, a substrate for electronic paper, a substrate for a solar cell, or a touch panel or other optical application, the thickness of the transparent composite sheet is preferably 40 to 200 µm, and more preferably 50 to 100 µm.

When the transparent composite sheet is used for an optical application, the average linear expansion coefficient thereof at 30°C to 250°C is preferably 40 ppm or lower, more preferably 20 ppm or lower, and most preferably 10 ppm or lower, and the glass transition temperature is preferably 200°C or higher, and more preferably 250°C or higher.

When the transparent composite sheet of the present invention is used as a plastic substrate for a display, the total light transmittance at a wavelength of 400 nm must be 80% or higher, and is preferably 85% or higher, and more preferably 88% or higher.

When the transparent composite sheet of the present invention is used as a plastic substrate for a display element, a resin coating layer may be provided to both sides of the substrate in order to enhance flatness. The resin used preferably has excellent heat resistance, transparency, and chemical resistance, and the aforementioned epoxy resin is specifically preferred. The thickness of the coating layer is preferably 0.1 µm to 30 µm, and more preferably 0.5 to 30 µm.

### Examples

The present invention will be described in detail hereinafter using examples, but the present invention within the intended scope thereof is not limited by the examples.

### (Example 1)

A T-glass-based glass cloth (thickness: 95 µm, refractive index: 1.526, manufactured by Nitto Boseki) was soaked with a resin composition obtained by mixing 75 parts by weight of a hydrogenated biphenyl alicyclic epoxy resin having the structure indicated by Chemical Formula (1) (E-BP, manufactured by Daicel Chemical Industries), 20 parts by weight of 3-ethyl-3-hydroxymethyloxetane (OXT-101, manufactured by Toagosei), 5 parts by weight of bisphenol S epoxy resin (EXA-1514, manufactured by DIC Corporation), and 1 part by weight of an aromatic sulfonium-based thermal cation catalyst (SI-100L, manufactured by Sanshin Chemical Industry), and the product was de-aerated. The glass cloth was placed between mold-release treated glass plates and heated for two hours at 80°C, then heated for another two hours at 250°C, and a transparent composite sheet having a thickness of 97 µm was obtained.

### (Example 2)

A T-glass-based glass cloth (thickness: 95 µm, refractive index: 1.526, manufactured by Nitto Boseki) was soaked with a resin composition obtained by mixing 75 parts by weight of a hydrogenated biphenyl alicyclic epoxy resin having the structure indicated by Chemical Formula (1) (E-BP, manufactured by Daicel Chemical Industries, Tg: > 250°C), 20 parts by weight of 3-(cyclohexyloxy)methyl-3-ethyloxetane (OXT-213, manufactured by Toagosei), 5 parts by weight of bisphenol S epoxy resin (EXA-1514, manufactured by DIC Corporation), and 1 part by weight of an aromatic sulfonium-based thermal cation catalyst (SI-100L, manufactured by Sanshin Chemical Industry), and the product was de-aerated. The glass cloth was placed between mold-release treated glass plates and heated for two hours at 80°C, then heated for another two hours at 250°C, and a transparent composite sheet having a thickness of 97 µm was obtained.

### (Example 3)

A T-glass-based glass cloth (thickness: 95 µm, refractive index: 1.526, manufactured by Nitto Boseki) was soaked with a resin composition obtained by mixing 85 parts by weight of a hydrogenated biphenyl alicyclic epoxy resin having the structure indicated by Chemical Formula (1) (E-BP, manufactured by Daicel Chemical Industries, Tg: > 250°C), 15 parts by weight of glycidol (manufactured by Tokyo Chemical Industry Co.), and 1 part by weight of an aromatic sulfonium-based thermal cation catalyst (SI-100L, manufactured by Sanshin Chemical Industry), and the product was de-aerated. The glass cloth was placed between mold-release treated glass plates and heated for two hours at 80°C, then heated for another two hours at 250°C, and a transparent composite sheet having a thickness of 97 µm was obtained.

### (Example 4)

A T-glass-based glass cloth (thickness: 95 µm, refractive index: 1.526, manufactured by Nitto Boseki) was soaked with a resin composition obtained by mixing 75 parts by weight of a hydrogenated biphenyl alicyclic epoxy resin having the structure indicated by Chemical Formula (1) (E-BP, manufactured by Daicel Chemical Industries), 20 parts by weight of 3-ethyl-3-hydroxymethyloxetane (OXT-101, manufactured by Toagosei), 5 parts by weight of an epoxy resin having a cardo backbone (EX-1040, manufactured by Onfine), and 1 part by weight of an aromatic sulfonium-based thermal cation catalyst (SI-100L, manufactured by Sanshin Chemical Industry), and the product was de-aerated. The glass cloth was placed between mold-release treated glass plates and heated for two hours at 80°C, then heated for another two hours at 250°C, and a transparent composite sheet having a thickness of 97 µm was obtained.

### (Example 5)

A T-glass-based glass cloth (thickness: 95 µm, refractive index: 1.526, manufactured by Nitto Boseki) was soaked with a resin composition obtained by mixing 75 parts by weight of a hydrogenated biphenyl alicyclic epoxy resin having the structure indicated by Chemical Formula (1) (E-BP, manufactured by Daicel Chemical Industries), 20 parts by weight of 3-ethyl-3-hydroxymethyloxetane (OXT-101, manufactured by Toagosei), 5 parts by weight of an epoxy resin having a cardo backbone (EX-1011, manufactured by Onfine), and 1 part by weight of an aromatic sulfonium-based thermal cation catalyst (SI-100L, manufactured by Sanshin Chemical Industry), and the product was de-aerated. The glass cloth was placed between mold-release treated glass plates and heated for two hours at 80°C, then heated for another two hours at 250°C, and a transparent composite sheet having a thickness of 97 µm was obtained.

### (Comparative Example 1)

A T-glass-based glass cloth (thickness: 95 µm, refractive index: 1.526, manufactured by Nitto Boseki) was soaked with a resin composition obtained by mixing 100 parts by weight of a hydrogenated biphenyl alicyclic epoxy resin having the structure indicated by Chemical Formula (1) (E-BP, manufactured by Daicel Chemical Industries, Tg: > 250°C), and 1 part by weight of an aromatic sulfonium-based thermal cation catalyst (SI-100L, manufactured by Sanshin Chemical Industry), and the product was de-aerated. The glass cloth was placed between mold-release treated glass plates and heated for two hours at 80°C, then heated for another two hours at 250°C, and a transparent composite sheet having a thickness of 97 µm was obtained.

### (Fabrication of a barrier-equipped substrate)

The substrates obtained in the examples and comparative example described above were set in the vacuum chamber of an RF sputtering device. When a vacuum of 5×10⁻⁴ Pa was reached, Ar gas was introduced at 0.1 Pa, an RF power of 0.3 kW was applied between the transparent composite sheet and a starting material SiO₂ target, and electrical discharge was started. When discharging was stabilized, a shutter provided between the transparent composite sheet and the starting material was opened, and depositing of an inorganic substance layer composed of SiOx on the transparent composite sheet was initiated. The shutter was closed and deposition ended when the inorganic substance layer had been deposited to a thickness of 100 nm, the vacuum chamber was opened to the atmosphere, and a barrier-equipped substrate was created.

The results of evaluating the composition and characteristics of the transparent composite sheets of the examples and comparative example are shown in Table 1, and the results of evaluating the barrier-equipped substrate are shown in Table 2.
The evaluation methods are described below.

### (a) Limiting curvature radius (bending characteristics)

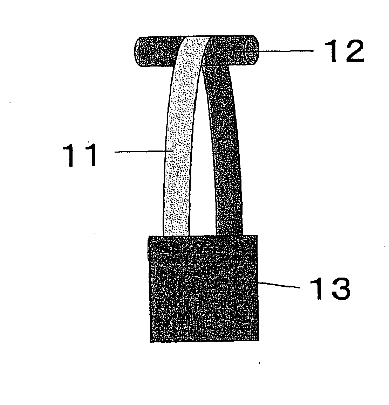

As shown in FIG. 1, the transparent composite sheet 11 cut to a width of 10 mm was wrapped around cylindrical metal rods 12 having various diameters, a 500 g weight 13 was hung on the transparent composite sheet, and the diameter of the metal rod when cracking occurred in the transparent composite sheet was designated as the limiting curvature radius.

### (b) Evaluation of undulation

The substrate surface in a predetermined measurement surface area (S₁) was scanned by a laser displacement sensor, the rate of increase (S₂ - S₁)/S₁ of the substrate surface area (S₂) with respect to the measurement surface area was computed as the undulation characteristic value, and the undulation characteristic value was determined based on such references as those described below.
Satisfactory o: Undulation characteristic value of 1.5×10⁻⁶ or less
Inferior ×: Undulation characteristic value of more than 1.5×10⁻⁶

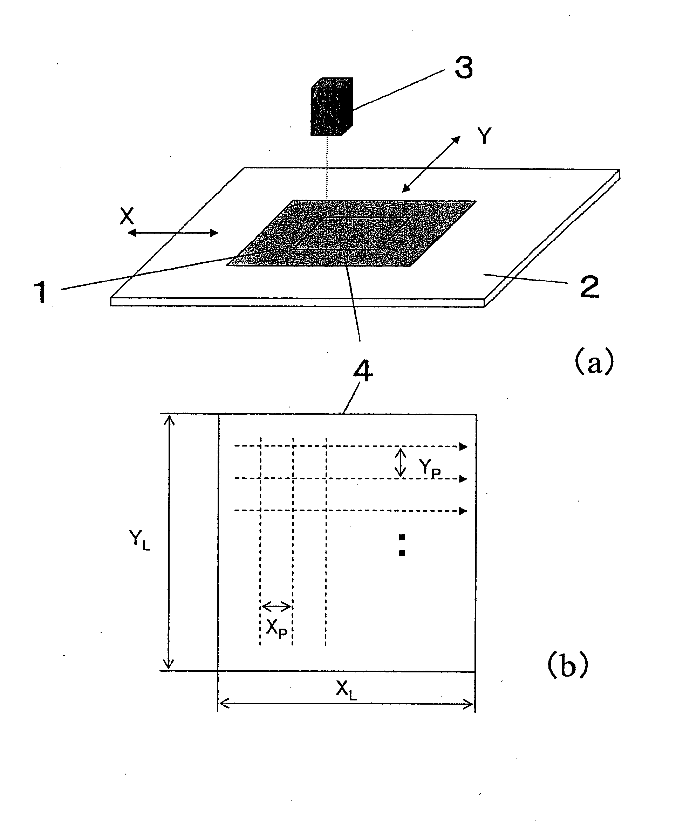

The measurement method is described in detail below. FIG. 2A shows the surface shape measurement device. The measurement device is composed of a fixed laser displacement sensor 3 (LT-9030M, manufactured by Keyence Corporation) and an X-Y auto stage 2 (manufactured by Coms Co.). A substrate 1 is placed on the auto stage, and a measurement range 4 [X_{L} × Y_{L}] is set. The laser displacement sensor is caused to scan by being moved in the X direction of the auto stage, and the height of the substrate surface is measured at a measurement pitch X_{P}. Substrate surface shape data are obtained at intervals of X_{P}, Y_{P} (FIG. 2B) by performing this scanning for each pitch Y_{P}. In this measurement, X_{L} and Y_{L} were set to 50 mm, and X_{P} and Y_{P} were set to 0.5 mm.

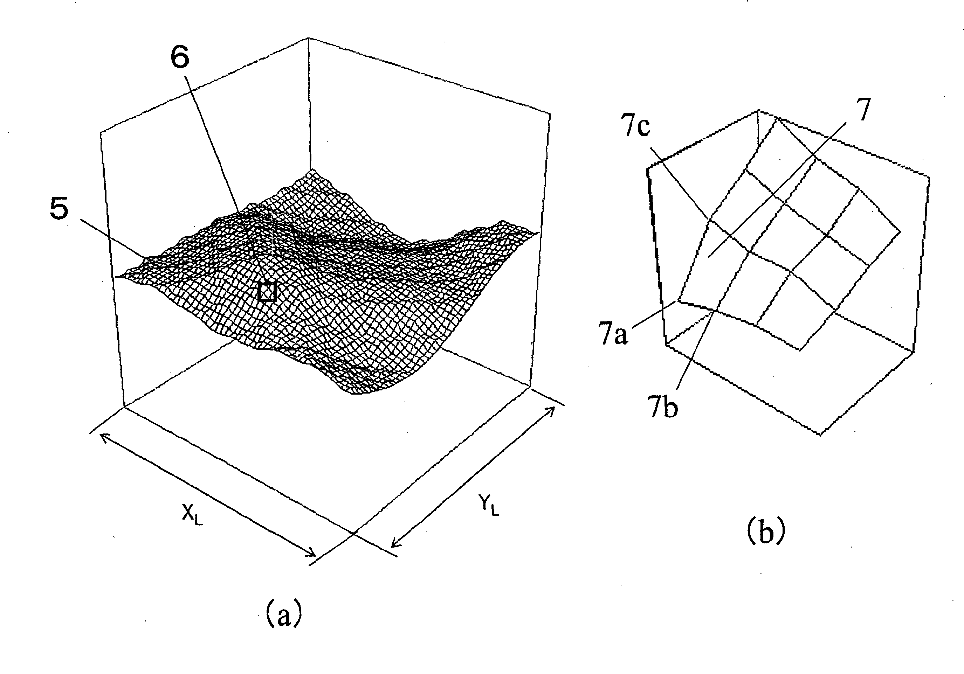

FIG. 3A shows the substrate surface 5 measured in a predetermined range. The surface areas of elements each formed by four adjacent measurement points are calculated in order to compute the surface area of the measured substrate shape. FIG. 3B is an enlarged view of a local portion 6 of the measured surface. In the element 7 formed by four adjacent points, a reference point 7a is set, the vector (X_{P}, 0, Z_{X}) of the point 7b on the X_{P} side with respect to the reference point is obtained by computing the height difference Z_{X} of the reference point and point 7b, and the vector (0, Y_{P}, Z_{Y}) of the point 7c on the Y_{P} side with respect to the reference point is obtained by computing the height difference Z_{Y} of the reference point and point 7c. The surface area of the plane formed by both vectors is similar to the surface area of the element 7, and the surface area is obtained by calculating the size of the vector product. The surface area (S₂) of the measured substrate is obtained by calculating the surface area of each element constituting the measurement surface by the same method and computing the sum of the surface areas. Since the obtained surface area approaches the measured surface area X_{L} × Y_{L} more closely the flatter the measured surface shape is, the measured surface area (S₁) is subtracted from the computed surface area (S₂) to compute the amount of increase in surface area due to surface irregularity. The value normalized by dividing by the surface area increase amount (S₂ - S₁) was used as the undulation characteristic value.

### (c) Average linear expansion coefficient

Using a Seiko Instruments TMA/SS6000 thermal stress distortion measurement device, the temperature was raised at a rate of 5°C per minute in a nitrogen atmosphere, measurement was performed in tensile mode with a load of 5 g, and the average linear expansion coefficient in a predetermined temperature range was computed.

### (d)Heat resistance

Using a Seiko Instruments DNS210 dynamic viscoelasticity measurement device, the maximum value of tan δ at 1 Hz was designated as the glass transition temperature (Tg).

### (e) Light transmittance

The total light transmittance at 400 nm was measured by a U3200 spectrophotometer (manufactured by Shimadzu Corporation).

### (f) Optical anisotropy

After setting a cross-Nicol state in a polarizing microscope, evaluation was performed at the position of strongest light transmission while the transparent substrate was rotated on the stage. The evaluation symbols are described below.
○: Satisfactory (some light transmission observed, but not to a practically problematic degree)
x: Unsatisfactory (significant light transmission observed; practically problematic)

### (g) Seal adhesion strength

The base resin and curing agent of a sealant TSE-3337, manufactured by Toshiba Silicone, in the amounts of 50 parts by weight each, and 2 parts by weight of EPOSTAR-GP-H80 (diameter: 8 µm) as a spacer, manufactured by Shokubai Kasei, were placed in a vessel and pre-mixed by a three-one motor, and then thoroughly kneaded and de-aerated by a three-roller machine to obtain a sealant. This sealant was applied by screen printing on a barrier-equipped substrate obtained by providing a barrier film to the substrates obtained in the examples and comparative example, and precuring was performed at 40°C for 14 minutes. Another substrate was then placed thereon, an effective pressure of 0.015 MPa was applied, the substrates were adhered together so that the width of the sealant was 1 × 30 mm, curing was performed at 70°C for 30 minutes and at 120°C for 30 minutes while pressure was applied, and a sample for evaluation was obtained. The obtained sample was cut into an 8 mm-wide strip shape, and the peel strength (90° peel strength) of the seal member was measured using a Tensilon tester. The seal adhesion strength and the state of cracking around the sealed part during peeling are shown in Table 2.

**[Table 1]**

| | | | Example 1 | Example 2 | Example 3 | Example 4 | Example 5 | Comparative Example 1 |
|---|---|---|---|---|---|---|---|---|
| Resin components | Alicyclic epoxy resin (E-BP) | | 75 | 75 | 85 | 75 | 75 | 100 |
| | Oxetane monomer (OXT-101) | | 20 | | | 20 | 20 | |
| | Oxetane monomer (OXT-213) | | | 20 | | | | |
| | Glycidol | | | | 15 | | | |
| | Bisphenol S epoxy resin | | 5 | 5 | | | | |
| | Cardo epoxy resin (EX-1040) | | | | | 5 | | |
| | Cardo epoxy resin (EX-1011) | | | | | | 5 | |
| | Cation polymerization catalyst (SI-100L) | | 1 | 1 | 1 | 1 | 1 | 1 |
| Glass filler | T-glass-based glass cloth (refractive index: 1.526) | | 95 µm per sheet | 95 µm per sheet | 95 µm per sheet | 95 µm per sheet | 95 µm per sheet | 95 µm per sheet |
| Refractive index of cured resin | | | 1.519 | 1.520 | 1.523 | 1.518 | 1.520 | 1.521 |
| Content ratio of resin in composite sheet | | | 36 | 40 | 36 | 40 | 40 | 38 |
| Characteristics of composite sheet | Average linear expansion coefficient (30 to 250°C) | ppm | 12 | 11 | 12 | 11 | 11 | 12 |
| | Light transmittance (@400 nm) | % | 87 | 86 | 87 | 86 | 87 | 90 |
| | Heat resistance (glass transition temperature) | °C | >250 | >250 | >250 | >250 | >250 | >250 |
| | Curvature diameter at cracking (limiting curvature radius) | mm | 7 | 8 | 6 | 7 | 7 | 11 |
| | Substrate undulation | | ○ | ○ | ○ | ○ | ○ | ○ |
| | Optical anisotropy | | ○ | ○ | ○ | ○ | ○ | ○ |

**[Table 2]**

| | Peel strength (N/8 mm) | State around sealed part |
|---|---|---|
| Barrier-equipped substrate of Example 1 | 1.6 to 4 | No change |
| Barrier-equipped substrate of Example 2 | 1.6 to 4 | No change |
| Barrier-equipped substrate of Example 3 | 1.6 to 4 | No change |
| Barrier-equipped substrate of Example 4 | 1.6 to 4 | No change |
| Barrier-equipped substrate of Example 5 | 1.6 to 4 | No change |
| Barrier-equipped substrate of Comparative Example 1 | 1.6 to 3 | Cracking present |

### INDUSTRIAL APPLICABILITY

The transparent composite sheet of the present invention can be suitably used in a transparent panel, an optical lens, a plastic substrate for a liquid crystal display element, a substrate for a color filter, a plastic substrate for an organic EL display element, a solar cell substrate, a touch panel, a light-guide plate, an optical element, an optical waveguide, an LED sealant, or the like.

### BRIEF DESCRIPTION OF THE DRAWINGS

FIG. 1 is a schematic view showing the method for testing the bending resistance characteristics of the transparent composite sheet;
FIG. 2 is a diagram showing an overview of the surface shape measurement device and the measurement pitch thereof; and
FIG. 3 is a diagram showing an enlargement of the measured substrate surface and local portion thereof.

### [KEY]

- 1: substrate
- 2: X-Y auto stage
- 3: laser displacement sensor
- 4: measurement range
- 5: measured substrate surface
- 6: local portion of measured surface
- 7: element formed by four adjacent points
- 11: transparent composite sheet
- 12: metal rod
- 13: weight

## Claims

1. A transparent composite sheet obtained by curing a composite composition comprising a transparent resin composition and a glass filler, wherein said transparent resin composition includes:
(i) an alicyclic epoxy resin indicated by Chemical Formula (1) below and/or an alicyclic epoxy resin indicated by Chemical Formula (2) below; 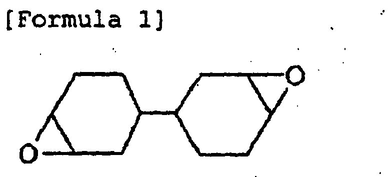 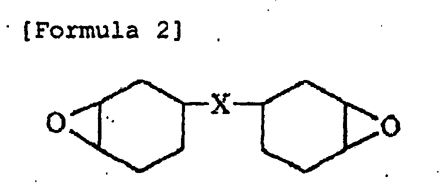 wherein in Formula 2, -X- is -O-, -S-, -SO-, -SO₂-, - CH₂-, -CH(CH₃)-, or -C(CH₃)₂-;
(ii) at least one type of compound other than said alicyclic epoxy resin, the compound having one cationic-polymerizable functional group and at least one polar group other than the cationic-polymerizable functional group in a molecule of the compound; and
(iii) a curing agent.

2. The transparent composite sheet according to claim 1, wherein the admixture ratio of said alicyclic epoxy resin and said compound having one cationic-polymerizable functional group is 99:1 to 70:30.

3. The transparent composite sheet according to claim 1 or 2, wherein said compound having one cationic-polymerizable functional group includes one or more compounds selected from the group that includes a compound having an epoxy group, a compound having an oxetanyl group, and a compound having a vinyl ether group.

4. The transparent composite sheet according to any one of claims 1 to 3, wherein said polar group is a hydroxyl group.

5. The transparent composite sheet according to any one of claims 1 to 4, wherein said curing agent comprises a cationic curing catalyst.

6. The transparent composite sheet according to any one of claims 1 to 5, wherein the content of said glass filler is 1 to 90 wt% with respect to the transparent composite sheet.

7. The transparent composite sheet according to any one of claims 1 to. 6, wherein said glass filler is a glass cloth.

8. The transparent composite sheet according to any one of claims 1 to 7, wherein the difference of the refractive index of said transparent resin composition after curing and the refractive index of the glass filler is 0.01 or less.

9. The transparent composite sheet according to any one of claims 1 to 8, wherein the thickness is 40 to 200 µm.

10. The transparent composite sheet according to any one of claims 1 to 9, wherein the transmittance of light having a wavelength of 400 nm is 80% or higher.

11. The transparent composite sheet according to any one of claims 1 to 10, wherein the average linear expansion coefficient at 30°C to 250°C is 20 ppm or lower.

12. A display element substrate comprising the transparent composite sheet according to any one of claims 1 to 11.

## Patentansprüche

1. Eine transparente Verbundfolie, erhältlich durch Härten einer Verbundstoffzusammensetzung, umfassend eine transparente Harzzusammensetzung und ein Glasfüllmittel, wobei die transparente Harzzusammensetzung beinhaltet:
(i) ein alizyklisches Epoxyharz, dargestellt durch untenstehende chemische Formel (1), und/oder ein alizyklisches Epoxyharz, dargestellt durch untenstehende chemische Formel (2); 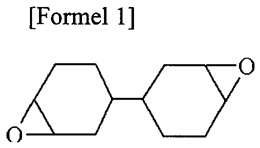 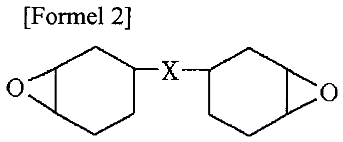 wobei -X- in Formel (2) die Bedeutung -O-, -S-, -SO-, -SO₂-, -CH₂-, -CH(CH₃)- oder -C(CH₃)₂- hat;
(ii) mindestens eine Art von Verbindung, die von dem alizyklischen Epoxyharz verschieden ist, wobei die Verbindung einen kationisch polymerisierbaren funktionellen Rest und mindestens einen polaren Rest, der von dem kationisch polymerisierbaren funktionellen Rest verschieden ist, in einem Molekül der Verbindung aufweist; und
(iii) ein Härtemittel.

2. Die transparente Verbundfolie gemäß Anspruch 1, wobei das Mischverhältnis des alizyklischen Epoxyharzes und der einen kationisch polymerisierbaren funktionellen Rest aufweisenden Verbindung 99:1 bis 70:30 ist.

3. Die transparente Verbundfolie gemäß Anspruch 1 oder 2, wobei die einen kationisch polymerisierbaren funktionellen Rest aufweisende Verbindung eine oder mehr Verbindungen, ausgewählt aus der Gruppe, welche eine eine Epoxygruppe aufweisende Verbindung, eine eine Oxetanylgruppe aufweisende Verbindung und eine eine Vinylethergruppe aufweisende Verbindung beinhaltet, einschließt.

4. Die transparente Verbundfolie gemäß einem der Ansprüche 1 bis 3, wobei der polare Rest eine Hydroxylgruppe ist.

5. Die transparente Verbundfolie gemäß einem der Ansprüche 1 bis 4, wobei das Härtemittel einen kationischen Härtekatalysator umfasst.

6. Die transparente Verbundfolie gemäß einem der Ansprüche 1 bis 5, wobei der Gehalt des Glasfüllmittels 1 bis 90 Gew.-%, bezogen auf die transparente Verbundfolie, beträgt.

7. Die transparente Verbundfolie gemäß einem der Ansprüche 1 bis 6, wobei das Glasfüllmittel ein Glasgewebe ist.

8. Die transparente Verbundfolie gemäß einem der Ansprüche 1 bis 7, wobei die Differenz des Brechungsindex der transparenten Harzzusammensetzung nach dem Härten und des Brechungsindex des Glasfüllmittels 0,01 oder weniger beträgt.

9. Die transparente Verbundfolie gemäß einem der Ansprüche 1 bis 8, wobei die Dicke 40 bis 200 µm beträgt.

10. Die transparente Verbundfolie gemäß einem der Ansprüche 1 bis 9, wobei die Durchlässigkeit für Licht der Wellenlänge von 400 nm 80 % oder höher ist.

11. Die transparente Verbundfolie gemäß einem der Ansprüche 1 bis 10, wobei der durchschnittliche lineare Expansionskoeffizient bei 30° bis 250°C 20 ppm oder weniger ist.

12. Ein Anzeigenelement-Substrat, umfassend die transparente Verbundfolie gemäß einem der Ansprüche 1 bis 11.

## Revendications

1. Feuille composite transparente obtenue par durcissement d'une composition composite comprenant une composition de résine transparente et une charge de verre, dans laquelle ladite composition de résine transparente comprend :
(i) une résine époxy alicyclique indiquée par la formule chimique (1) ci-dessous et/ou une résine époxy alicyclique indiquée par la formule chimique (2) ci-dessous : 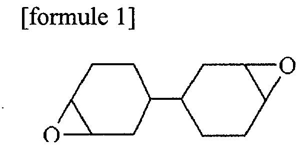 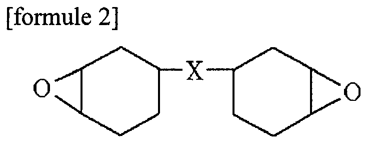 où, dans la formule 2, -X- est -O-, -S-, -SO-, -SO₂-, -CH₂-, -CH(CH₃)- ou -C(CH₃)₂- ;
(ii) au moins un type de composé autre que ladite résine époxy alicyclique, le composé ayant un groupe fonctionnel polymérisable par voie cationique et au moins un groupe polaire autre que le groupe fonctionnel polymérisable par voie cationique dans une molécule du composé ; et
(iii) un agent durcisseur.

2. Feuille composite transparente selon la revendication 1, dans laquelle le rapport de mélange de ladite résine époxy alicyclique et dudit composé ayant un groupe fonctionnel polymérisable par voie cationique est de 99/1 à 70/30.

3. Feuille composite transparente selon la revendication 1 ou 2, dans laquelle ledit composé ayant un groupe fonctionnel polymérisable par voie cationique comprend un ou plusieurs composés choisis dans le groupe qui comprend un composé ayant un groupe époxy, un composé ayant un groupe oxétanyle, et un composé ayant un groupe vinyléther.

4. Feuille composite transparente selon l'une quelconque des revendications 1 à 3, dans laquelle ledit groupe polaire est un groupe hydroxyle.

5. Feuille composite transparente selon l'une quelconque des revendications 1 à 4, dans laquelle ledit agent durcisseur comprend un catalyseur de durcissement cationique.

6. Feuille composite transparente selon l'une quelconque des revendications 1 à 5, dans laquelle la teneur en ladite charge de verre est de 1 à 90 % en poids par rapport à la feuille composite transparente.

7. Feuille composite transparente selon l'une quelconque des revendications 1 à 6, dans laquelle ladite charge de verre est un tissu de verre.

8. Feuille composite transparente selon l'une quelconque des revendications 1 à 7, dans laquelle la différence entre l'indice de réfraction de ladite composition de résine transparente après durcissement et l'indice de réfraction de la charge de verre est de 0,01 ou moins.

9. Feuille composite transparente selon l'une quelconque des revendications 1 à 8, dans laquelle l'épaisseur est de 40 à 200 µm.

10. Feuille composite transparente selon l'une quelconque des revendications 1 à 9, dans laquelle la transmittance de la lumière ayant une longueur d'onde de 400 nm est de 80 % ou plus.

11. Feuille composite transparente selon l'une quelconque des revendications 1 à 10, dans laquelle le coefficient d'expansion linéaire moyen à une température allant de 30 °C à 250 °C est de 20 ppm ou moins.

12. Substrat pour élément d'affichage comprenant la feuille composite transparente selon l'une quelconque des revendications 1 à 11.
